# EUROPEAN PATENT APPLICATION

(11) **EP 4 667 094 A1**
(43) Date of publication of application: **24.12.2025**
(21) Application number: 24020204.4
(22) Date of filing: 18.06.2024
(51) Int. Cl.: B01J 8/06, B01J 19/00, B01J 19/24

(54) **REACTOR ARRANGEMENT AND METHOD FOR CARRYING OUT A CHEMICAL REACTION**

(71) Applicant: Linde GmbH, 82049 Pullach (DE); BASF SE, 67056 Ludwigshafen am Rhein (DE); SABIC Global Technologies B.V., 4612 PX Bergen op Zoom (NL)
(72) Inventor: Eberstein, Christopher, 82049 Pullach (DE); Hofstätter, Martin, 82049 Pullach (DE); Zellhuber, Mathieu, 82049 Pullach (DE); Mayerhofer, Matthias, 82049 Pullach (DE); Rößler, Felix, 82049 Pullach (DE); Schmidt, Gunther, 82049 Pullach (DE); Oprins, Arno Johannes Maria, 6160 GA Geleen (NL)
(74) Representative: Gellner, Bernd

(57) **Abstract**

A reactor arrangement is designed for conducting chemical reactions and comprises a reactor vessel with walls and an internal reaction region. It features multiple reaction tubes extending through both the vessel and the reaction region. The reaction region contains at least 90% of the length of each tube within the vessel. The tubes are separated by interspaces within this region. Additionally, the arrangement includes electric heaters equipped with heating elements to radiantly heat the tubes. These heaters are mounted on flat, contiguous surfaces within the vessel. The heating elements are systematically spaced apart by interspaces and/or intraspaces, creating an effectively heated surface on the mounting planes. A key aspect of this design is that for the majority of this heated surface area, the direction of the normal vector is oriented towards the reaction region, ensuring optimal heating and reaction efficiency.

## Description

The present disclosure relates to a reactor arrangement and to a method for carrying out a chemical reaction in which such a reactor arrangement is used.

### Background

In a number of processes in the chemical industry, reactors are used in which one or more reactants are passed through heated reaction tubes where they are catalytically or non-catalytically reacted. Heating serves in particular to overcome the activation energy required for the chemical reaction to take place and, in the case of endothermic reactions, to provide the necessary energy for the chemical reaction. The reaction can proceed endothermically overall or, after overcoming the activation energy, exothermically. The present disclosure relates in particular to strongly endothermic reactions as further discussed below.

Examples of such processes are steam cracking, various reforming processes, in particular steam reforming, dry reforming (carbon dioxide reforming), mixed reforming processes, and processes for the dehydrogenation of alkanes. In steam cracking, the reaction tubes are passed through the reactor in the form of coils, which typically have at least one reverse bend in the reactor, whereas in steam reforming, tubes are typically used which run through the reactor without a reverse bend. Embodiments as disclosed herein may also be used in connection with so-called "millisecond" or single-pass reactors which are characterized by very low dwell times.

Further applications of embodiments proposed herein are reactors for performing a reverse water gas shift (RWGS) reaction of carbon dioxide and hydrogen to form carbon monoxide and water, a dehydrogenation of oxygenates such as a reaction of methanol to formaldehyde and hydrogen, cracking of ammonia to yield nitrogen and hydrogen, dehydrogenation of so-called liquid organic hydrogen carriers (LOHC) as known in the field concerned, and reforming of methanol and glycerol (as far as not already included by the term "reforming" used above).

Embodiments as disclosed herein are suitable for all such processes and embodiments of reaction tubes. Purely by way of illustration, reference is made to expert literature such as the articles "Ethylene", "Gas Production" and "Propene" in Ullmann's Encyclopedia of Industrial Chemistry in its current versions.

The reaction tubes of the reactors mentioned are conventionally heated by using burners and a fuel such as natural gas. The reaction tubes are, for this purpose, guided through a combustion chamber in which the burners are also arranged at appropriate locations known in the field.

Currently, however, demand is increasing for synthesis products such as olefins, but also for synthesis gas and hydrogen, which are produced with no or reduced local carbon dioxide emissions. This demand cannot be met by processes using fired reactors due to the use of typically fossil fuels. Other processes are practically excluded due to high costs or for other reasons.

It has therefore been proposed to support or replace the burners in the reactors by electrical heating means. In addition to direct electrical heating, in which current is applied to the reaction tubes themselves, for example in a known star (point) circuit, and other types of heating, which are not explained in detail here, concepts also exist in particular for so-called indirect electrical heating. This is also used in the context of the present disclosure. Irrespective of the specific type of heating and the heating concept implemented in the process, heated reactors, whether heated by burners and/or electricity, are also referred to as "furnaces" herein.

Indirect electrical heating can be carried out, as explained e.g. in WO 2020/002326 A1, using electrically operated radiative heaters suitable for obtaining the high temperatures required for the reactions mentioned, such heaters being arranged within the furnace in such a way that they are not in direct contact with the reaction tubes. The heat transfer from the heaters to the reaction tubes takes place predominantly or exclusively in the form of radiant heat, without direct contact. Therefore, terms "indirect heating", "heating by means of radiant heat" and the like are used synonymously below. Properties of corresponding heaters are also discussed below.

There is a need for measures which permit an advantageous layout and design of a reactor which is indirectly electrically heated using radiation heating as well as measures which permit advantageous operation of a reactor of the type explained.

### Summary

Against this background, a reactor arrangement and a method for carrying out a chemical reaction comprising the features of the independent claims are proposed herein. Embodiments thereof are the subject matter of the dependent claims and the description that follows hereinbelow.

The reactor arrangement proposed herein is configured for carrying out a chemical reaction, particularly an endothermic reaction as discussed at the outset. The reactor arrangement comprises a reactor vessel comprising a wall, particularly a thermally isolated wall, and a reaction region within the reactor vessel. Reaction tubes, in particular coils in an arrangement typically used for steam cracking, or straight reaction tubes in an arrangement typically used for steam reforming, extend through the reactor vessel and through the reaction region within the reactor vessel and are spaced apart from one another therein, i.e. at least in the reaction region, by tube interspaces. The reaction region is particularly surrounded by a void or empty space.

The reaction region within the reactor vessel includes at least the central 90% of a total run length of each of the reaction tubes within the reactor vessel. In other words, for example, the first 5% and the last 5% of the reaction tubes within the reactor vessel may also extend outside the region within the reactor referred to herein as the reaction region. These may also be, for example, supply or discharge lines to or from the reaction tubes or portions thereof in the reaction region which may be routed in any manner within the reactor vessel. In other words, the central 90% of the total run length oft he reaction tubes lie within the reaction region. Generally, the reaction tubes can be seen as divided into three parts, which are the supply piping, the tubes in the reaction region, and the discharge piping. If reference is made here to an interior or an inner space of the reactor vessel or if it is mentioned that certain elements are arranged or extend through or within the reactor vessel, the term reactor vessel is to be understood as a space enclosed by the walls of the reactor vessel.

In particular, the reaction region is not separated from the rest of the interior of the reactor vessel by special structural partitions. However, it is surrounded, in particular on several sides, by an empty space inside the reactor vessel through which the reaction tubes do not pass, and which therefore does not form part of the reaction region. In a typical arrangement, such as that typically used for steam cracking, the reaction tubes run from top to bottom to one or more reverse bends with one or more optional branches and then from bottom to top. The empty space surrounds the reaction tubes at the sides and in a lower area of the reactor vessel. The term "coil" is also used for reaction tubes used for steam cracking, and the present disclosure can also include so-called "split coil" arrangements as known per se.

As proposed herein, one or more electric heaters with heating elements are provided within the reactor vessel, which are adapted to heat the reaction tubes with radiant heat, i.e. they radiate heat to the reaction tubes in the reaction region. The heat radiation provided by means of the heaters arranged in the reactor vessel is suitable for heating the reaction tubes in the reaction region to an appropriate temperature level for the reaction envisaged, hereinafter also referred to as a "reaction tube temperature level", which is in particular in a range between 400 °C and 1,500 °C, such as between 450 °C and 1,300 °C or between 500 °C and 1,200 °C.

The heaters are arranged in particular onor in the vicinity of one or more mounting surfaces within the reactor vessel, which define the respective mounting planes. If, herein, reference is made to a "heater", this terminology is intended to comprise the "heating elements" of a heater, such as, but not limited to, wires or rods in a meandering or straight arrangement, and to the fixature for these, such as a ceramic body or the like, electric connectors, and other elements carrying or supporting the heating elements. It comes without saying that, when reference is made hereinbelow that a heater radiates heat, it is actually the heating elements which are the causative elements for heat radiation, and both statements are equally valid. The term "vicinity", as understood herein, shall include distances which are caused by mounting elements or which are the results of mounting tolerances, or may include distances of, e.g., up to 1%, 5% 10% or 20% of a reactor diameter.

That is, the one or more mounting surfaces is or are provided within the reactor vessel in the form of one or more planar contiguous surfaces, i.e. one or more surfaces which is or are contained within the same geometric plane, on which heaters can be mounted. In the scope of the present disclosure, a single heater cannot be arranged on more than one mounting plane. Within the scope of the present disclosure, only planar mounting surfaces are considered, as a distinction from alternative reactor vessel designs where heaters may be arranged on continuously curved mounting surfaces, e.g. on rounded cylinder surfaces.

A mounting plane according to the present disclosure is thus a planar contiguous surface, i.e. a surface which is contained within the same geometric plane, within the reactor vessel on which heaters can be arranged. More generally, the term "heating surface" is also used below for a mounting plane equipped with at least one heater. A heating surface or mounting plane equipped with heaters may in particular be an inner wall surface of the reactor vessel. A first heating surface may be arranged at a certain non-zero angle (e.g., an included angle between 5° and 175°) with an adjacent planar surface, on which no heaters are arranged, the latter being described more generally by the term "non-heated surface".

It is also possible in certain embodiments that two distinct heating surfaces are directly adjacent to each other, with the respective mounting planes arranged at a certain non-zero angle to each other, as further explained below for certain embodiments.

For the purposes of this specification, mounting planes are defined to be the largest contiguous planar surfaces that are equipped with heaters. For example, in a furnace shaped as a rectangular prism, with heaters mounted on two opposing walls, there are exactly two mounting planes, and neither of the walls may be subdivided to define adjacent sub-planes as mounting planes.

The one or more heaters to which an electrical current can be applied are arranged in or on each of the heating surfaces. These heaters comprise the heating elements already mentioned, which are electrically conductive and formed from one or more metallic or non-metallic materials. The heating elements comprise a mostly constant cross-section profile in the form of, for example, a circle, an annulus, an ellipsoid, a rectangle, a square, an angle, or a cross, or others. Metallic heating elements can be formed in particular from an alloy containing at least the elements Fe, Cr and Al. Alternatively or additionally, metallic heating structures can also be formed at least partially from nickel-chromium alloys, copper-nickel alloys or nickel-iron alloys. Non-metallic heating elements can e.g. be made out of silicon carbide (SiC) or molybdenum disilicide (MoSi₂) type materials.

Each of the heating surfaces can support one or more of the heaters, and therefore heating elements, or be occupied by one or more heaters with heating elements. One or more adjacent heaters with heating elements of the same or different shape and/or material may be placed on the same heating surface and be spaced apart from one another by "heater interspaces". Heating elements may be laid out in different shapes on or within (e.g. in grooves of) a heater, e.g. in the form of meanders, U-bends, straight tubes or others. Different leg or meander sections of the same heating element are spaced apart from one another by "heating element intraspaces" in the language as used herein. Based on these definitions the term "effectively heated surface" of a heating surface is the contiguous area of said heating surface that is covered by all of the heating elements of the heaters mounted on said heating surface, as well as all of the interposed heater interspaces and heating element intraspaces.

The heat radiation of each of the heaters of heating elements contained in or on the effectively heated surface comprises (in addition to heat radiated in another direction, in particular within a view angle) heat radiated perpendicularly to the heating surface on which they are mounted. Each of the heaters or heating elements on said heating surface is thus arranged according to the present disclosure to radiate heat comprising heat radiated perpendicularly to the heating surface in the reactor vessel, i.e. in the direction given by the local normal vector to the mounting plane.

According to the present disclosure, an arrangement has been found to be particularly advantageous, and is therefore proposed herein, in which the heaters with their heating elements are arranged on a mounting plane or surface in such a way that for more than 90%, preferably more than 95%, most preferably more than 99% of the effectively heated surface area of said heating surface the local normal vector to the mounting plane is directed onto the reaction tubes and the tube interspaces in the reaction region, which may be described by an outer contour of the reaction region. In particular, an outer contour of the reaction region is defined in the context of the present disclosure by a smallest possible convex envelope that completely contains the reaction tubes within the reactor vessel.

The present disclosure, by the arrangement and orientation of the radiant heaters as provided herein, provides in particular advantages with respect to service life and operational reliability. Investigations have shown, for example, that in particular for an application of heaters and heating elements in cracking furnaces, but also in comparable other chemical reactions, with the high temperatures prevailing there and the high heat flux densities required for economical operation, it is necessary to operate the radiant heaters in a demanding temperature limit range above 1,100°C, and to do so as trouble-free as possible over a period of several years.

Particularly when FeCrAl alloys are used for the heating elements, but also when other metallic or non-metallic (like SiC or MoSi₂ type) materials are used, an arrangement that deviates from the present disclosure can lead to local element overheating, which can result in premature degradation and thus failure of the heating elements. In said temperature range, small variations of the heating element temperature in the range of 30 to 40 K may already lead to a doubling or halving of the heating element durability. The lever of the thermal system design on the hardware durability is thus significant.

The precise adaptation of the heater or heating element distribution on their mounting surfaces in close accordance with the geometric shape of the heating load is typically not required and/or foreseen in the design of indirectly heated electric furnaces for batch heating of heating loads of variable geometry, or in the design of so-called belt furnaces, where view factors between heating elements and the moving heat loads are not fixed. It was found herein that for the innovative application of electric heating for high-temperature reactor vessels, in which the relative placements of heaters and heating load are invariant and heat is provided continuously over many weeks, different thermal designs are required to produce the most desired results.

The arrangement proposed herein avoids local non-uniformity of temperatures of the heaters or heating elements (i.e. local hot spot formation) by the above-mentioned measures, the arrangement comprising in particular that only selected areas on the wall of the reactor vessel are covered with heaters or heating elements, so that at least a part of a coil row in the reaction region is located in direct perpendicular line-of-sight to a large proportion of the mounting plane area covered by heaters or heating elements and their interspaces and intraspaces, so that the effects according to the present disclosure are achieved.

The measures proposed in accordance with the present disclosure reduce direct mutual radiation between opposing heaters or heating elements mounted on distinct planes or surfaces, and will also tend to decrease the exposure of heaters or heating elements to reflected heat from surfaces that are neither effectively heated surfaces nor reaction tubes, such as unheated side walls.

To summarize certain aspects of embodiments disclosed herein, in the reactor assembly distinct mounting planes of at least two of the heaters may be arranged parallel to each other and on opposite sides of the reaction region, the at least two heaters facing the opposite sides of the reaction region. This enables the particular advantages mentioned before to be realized.

In the case of a reactor for steam cracking with reverse bends located in a lower region of the reactor vessel, this means in particular that the design of the heaters or heating elements in a lower region of the reactor vessel is such that at least a part of the lower region of the reactor walls is not occupied by heaters or heating elements, this lower region corresponding in particular to the lower region of the reactor interior through which no reaction tubes (coils) are passed when considering the reaction tube dimensions at ambient temperature conditions (no thermal elongation) and in newly built state (no creep expansion), thereby defining the lower clearance under the reverse bends in embodiments as proposed herein.

In other words, according to certain embodiments inlet and outlet connections to the reaction tubes are located in an upper region of the reactor vessel and the one or more reaction tubes each have one or more reverse bends in a lower region of the reactor vessel below which a clearance space free of reaction tubes is provided in the reactor vessel, wherein the mounting planes are free of heaters at a position corresponding to the clearance space in the reactor vessel.

In addition to the relative geometrical arrangement of reaction tubes and heaters or heating elements, a further significant reduction of the heating element operating temperature and thus an improvement of their lifetime is achieved in the scope of the present disclosure by purposeful selection of layout and characteristic design parameters of both reaction tubes and heaters or heating elements.

Therefore, in preferred embodiments, the external surface area of the reaction tubes is selected such that the average absorbed heat flux at the outer reaction tube surface is between 40 and 65 kW/m², in particular between 45 and 60 kW/m².

The claimed range is below values typically chosen for state-of-the-art fired steam cracker furnaces (typically between 65 and 90 kW/m²). Indeed, in state-of-the-art fired furnaces, the reaction tube surface and therefore the coil material tonnage is intended to be minimized to reduce initial capital expenditure and subsequent maintenance costs, the reaction tubes being typically the components with the highest specific cost and the shortest lifetimes (i.e. usage time between replacements). The present disclosure rejects this common optimization guideline acknowledging that in an indirectly heated electric furnace an additional key component with elevated specific cost and limited lifetimes is introduced, namely the radiative heaters. From a total cost of ownership perspective, it is thus considered advantageous in the scope of the present disclosure to deviate from the commonly preferred cracking coil design for fired furnaces by installing additional coil surface to lower the heat flux per coil surface to reduce the surface temperature of the newly introduced radiative heaters or heating elements and, thereby, to increase the lifetime of the newly introduced radiative heaters or heating elements.

The increase in reaction tube surface when adapting a reaction tube design from a fired furnace to an indirectly heated electric furnace is preferentially executed by maintaining a similar, application-specific residence time of the process gas within the one or more reaction tubes. The residence time can be calculated as the quotient between inner void volume contained in the one or more reaction tubes and the volumetric gas flow rate passing through the one or more reaction tubes. In practice, this means that a mere increase of the number of identical reaction tubes to increase the total tube surface is not sufficient, as this would lead to increased residence times, but that an increased number of thinner reaction tubes with reduced flow rate but similar residence time is preferably used.

In technical/geometrical terms, the desired effect can be achieved in certain embodiments by foreseeing a high ratio between the outer surface of the reaction tubes and their inner void volume. Conventional reaction tubes in steam cracker furnaces show (overall) outer surface to (overall) inner fluid volume ratios typically between 40 and 90 m²/m³. At specific positions along the reaction tube, this ratio may be locally higher or lower, however, not compromising the (overall) outer surface to (overall) inner fluid volume ratio. In contrast, embodiments as disclosed herein may comprise (overall) ratio values of more than 90 m²/m³ or most preferably more than 100 m²/m³, and particularly up to 150 m²/m³.

Certain embodiments with low absorbed heat flux and high outer surface to inner fluid volume ratios can be implemented by using reaction tubes with only one parallel pass throughout the entire reaction tube length or with a split reaction tube design, for which part of the reaction tube length features two or more, e.g. up to 10 or even up to 20 parallel passes (preferably arranged close to the reaction tube inlet). Wall thicknesses may particularly be kept low, such as at values between 4 and 8 mm, to minimize the thermal resistance through the tubewalls, while respecting minimum sound wall thickness and manufacturing limitations.

The use of such small-diameter, thin-walled reaction tubes is typically not preferred in fired cracking furnaces. The resulting small diameters are typically prone to lead to runtime limitations caused by fast pressure drop increase, in particular, if local flame-induced hotspots cause increased local coking and thus significant flow congestion at critical locations within the reaction tube. Embodiments as disclosed herein make use of the more controlled and homogeneous heat input in an electrical furnace. In combination with the low heat flux density, both the spatially averaged and the maximum local coking rates will be significantly reduced in an electrically heated furnace, compared to an application of such reaction tubes in fired cracking furnaces.

In other words, embodiments as disclosed herein exploit the benefits of a very homogeneous electrical heating distribution to modify the reaction tube design in a targeted manner (which is not practicable in fired furnaces) such that, eventually, the electric heating element lifetime is maximized. As a positive side-effect, reduced coking rates also lead to slower carburization of the reaction tube material, which is beneficial for the reaction tube lifetime and facilitates the implementation of small wall thicknesses. Despite the reduced reaction tube dimensions, in the context of the present disclosure, increases of runtimes between decoking cycles are possible, due to lower reaction tube heat flux and reduced coking rates.

The reaction tube outer surface temperatures may additionally be lowered by using heat-transfer promoting structures on the inner tube side, and/or spirally wound vertical tube sections. Alternatively or additionally, one or more coating layers inhibiting coke formation and/or deposition may be applied on the inner surface of the reaction tubes, thereby slowing down the build-up of a coke layer on the inner reaction tube surface, which results in a slower build-up of additional thermal resistance and thus in a lower outer surface temperature of the reaction tube over time.

A further improvement is provided herein, also deviating from the common design practice known from fired furnaces, in terms of relative tube arrangements within the reaction tube "curtain" or outer contour of the reaction region.

Commercial-scale fired furnaces are typically characterized by the assembly of large, interlaced reaction tube groups, where a series of inlet tube segments from a group of separate reaction tubes are disposed adjacent to each other, followed by a series of the outlet tube segments from the same group of reaction tubes. Moreover, neighboring reaction tube groups may even be arranged mirroring each other, so that e.g. the series of outlet tube segments from a first reaction tube group are placed next to the series of outlet tube segments from a second reaction tube group. The grouping and mirroring of reaction tubes and groups in fired furnaces is typically done to simplify external piping and heat exchanger arrangements, to create larger furnace outlet and inlet sections in more conventional designs.

In the context of the present disclosure, this common practice from fired furnace design may not be considered advantageous, as larger zones containing only comparatively hot outlet tube segments will result in high average reaction tube surface temperatures in that zone and, consequently, in high temperatures of heating elements facing that region of the coil arrangement.

Therefore, according to embodiments disclosed herein, reaction tube arrangements may be constructed such that no more than 10, no more than 8, no more than 6, no more than 4, or no more than 2 outlet tube segments are disposed directly next to each other. This may e.g. be achieved by avoiding mirrored reaction tube groups and limiting the coil group size to 10, 8, 6, 4, or 2, respectively. Alternatively, mirrored reaction tube groups may be used with coil group sizes limited to 5, 4, 3, 2, or 1, respectively.

Further aspects disclosed herein cover the cross-sectional design of the heating element itself as well as the relative amount of heating element surface relative to the reaction tube surface. In particular in combination with metallic heating elements, which are in embodiments made of an alloy containing iron, chromium, and aluminum, i.e. a FeCrAl alloy, an area ratio R_{A} between the total outer surface area of all heating elements in common (radiation heat source) and the total outer surface area of all reaction tubes in common (radiation heat sink) between 2 and 5 m²/m², preferably between 2.5 and 4.5 m²/m², most preferably between 3 and 4 m²/m² is provided. A high area ratio R_{A} may be achieved by various means, which may very well be used in combination, e.g. by complex wall shapes with multiple adjacent heating surfaces arranged with a non-flat angle to each other, small heating element interspace and intraspace dimensions, and/or, most preferably, heating element cross-section profiles with high outer surface per length. A resulting high heating element surface area further contributes to lowering the heating element surface temperature and thus to reducing e.g. oxidation rates for metallic elements. Similar influence of element temperature on heating element lifetime, but caused by differing underlying damaging mechanisms, can be reckoned for alternative heating element types like SiC and/or MoSi₂, which could lead to deviating preferred heating element to reaction tube surface ratios than the ones indicated for FeCrAl heating elements.

Radiative heat transfer promoting structures on the outer reaction tube surfaces, e.g. extending fins to increase the outer reaction tube surface area may also be used according to the present disclosure to mimimize the absolute temperature difference between the heating element and the reaction tube surface. Outer reaction tube surfaces and/or the unheated and/or the heated refractory wall surfaces may alternatively or additionally be coated with temperature-resistant high-emissivity layers to achieve a similar effect.

The actual heater or heating element lifetime is not only influenced by the rate of oxidation at the element surface but also by the available "reservoir" of slowly oxidizing material. Indeed, the high-temperature oxidation behavior of FeCrAl alloy materials is characterized by the fact that a comparatively stable aluminum oxide layer is typically formed at the outer heating element surface, which permits a steady but slow oxidation of the heating element material. Aluminum is consumed in the formation of the oxide layer, leading to a gradual depletion of aluminum from the alloy. Rapid material deterioration typically takes place where aluminum is depleted below some critical level, leading to significantly faster oxidation of other alloy constituents at the heating element surface and eventually to full material failure. The available aluminum reservoir can be increased by selecting a heating element cross-section profile with a sufficiently large ratio between inner solid volume and outer heating element surface. According to the present disclosure, this ratio may be selected to be at least 1.5 mm³/mm² at all locations along the length of the heating element. Higher local values may be foreseen in particular in protrusion areas through furnace wall insulations to reduce local heat dissipation in not freely radiating areas and consequently to avoid local hot spot formation and premature heating element degradation. Certain embodiments may for example feature a rectangular element cross-section with heating element width and thickness chosen accordingly, or cylindrical element cross-sections with diameter chosen accordingly. Alternative heating element cross-section shapes may equally be used.

In particular when using metallic heating elements, through the combination of a low heat flux at the coil surface, a fairly high ratio between heating element surface and reaction tube surface and a fairly high inner volume to outer surface ratio, embodiments as disclosed herein result in a comparatively massive design, with high weights of reaction tube material and heating element material.

The person skilled in the art would not be inclined to arrive at such a design, as it goes against the commonly acknowledged design targets to minimize material weights for reduced capital expenditure. A conventional approach adopted by a person skilled in the art would instead e.g. be to "stretch" a conventional box layout while maintaining the duty, i.e. to increase spacing between adjacent reaction tubes and/or groups and therefore increasing the furnace length, to achieve lower heat flux rates per furnace wall area. This would typically result in high furnace coilbox footprints and large structural assemblies. The resulting high plot requirement and installation effort may be impractical, in particular in the context of replacing fired furnaces in an existing plant with limited plot availability. Combining part of or all features of embodimens claimed herein thus aims at enabling a plot-efficient furnace box design that can be implemented in combination with different types of heating elements. The additional investment regarding heating element and reaction tube material is compensated by the mentioned gains in box footprint and will be highly beneficial for heating element durability and thus for low maintenance cost as well as for high furnace availability.

As described above, embodiments as disclosed herein may include the possibility to reduce heating element tonnage by choosing in particular non-metallic heating elements, which do however require a more complex electric power control and supply due to higher variations of the electric resisitivity of the materials related to temperature variations and/or ageing. In all cases, the aspects described herein related to relative geometric arrangement of heating elements regarding the reaction tubes and their interspaces, as well as the aspects related to the design and arrangement of the reaction tubes are applicable and beneficial for achieving the desired increase in heating element lifetime.

A cracking furnace built according to the previously described features is preferably operated at process conditions most favorable to achieve a maximum durability of heating elements. Accordingly, in certain embodiments as disclosed herein, the furnace may be operated with a coil outlet temperature of no more than 860 °C, such as no more than 840 °C, or no more than 820°C. Milder cracking conditions at lower coil outlet temperatures have multiple benefits when it comes to the operation of electric cracking furnaces according to embodiments disclosed herein. Lower process peak temperatures reduce the average and maximum temperature of the outer coil surface, which is beneficial for lowering the heating element temperature and thus increases the durability of the latter. Moreover, at mild cracking conditions, the coking rate is lowered, thereby increasing the runtime between decoking cycles, which is particularly advantageous when using low heat flux coils with comparatively low diameter, as laid out herein. In addition, longer intervals of continuous cracking operation reduce the number of required decoking cycles and, hence, the number of cyclic thermal loading of the heating elements, i.e., cool-down of the heating element to decoking conditions and subsequent heat-up of the heating elements to cracking conditions. These transient operating sequences may affect the integrity of the protective oxide layer on the FeCrAl heating elements, e.g. due to different thermal expansion coefficients of oxide layer and bulk material. Hence, a reduced number of decoking cycles per runtime is beneficial regarding heating element durability.

Overall, the instrumentalities proposed herein enable design and operation-based lifetime management of a reactor or the radiant heaters installed therein. Improved heating element durability results in higher furnace availability, lower maintenance and repair requirements, and thus generally higher productivity and resource utilization. Embodiments as disclosed herein are suitable for various electric heating elements and their integration into heaters or reactor vessels, as discussed below.

In certain embodiments, a reactor arrangement is provided in which the heating elements are facing partial regions of the reaction zone in which the reaction tubes are arranged at different reaction tube densities, i.e. in particular have tube interspaces of different sizes. In this embodiment, the radiant heaters are configured in particular to apply different amounts of heat to the subregions, either by individual heating elements or groups of heating elements emitting different amounts of heat or by several radiant heaters irradiating certain regions in which a greater amount of heat is to be applied.

In a particularly preferred reactor arrangement according to one embodiment as disclosed herein, the mounting planes of at least two of the radiant heaters are arranged parallel to each other and on opposite sides of the reaction region, with the heating elements mounted on heating surfaces which are arranged parallel to each other and each of them facing the reaction region located in between the two heating surfaces. In a particular embodiment, the mounting planes may thereby be defined by opposing, parallel reactor walls.

In a further development of the embodiment just mentioned, the mounting planes of a plurality of pairs of radiant heaters, each facing one another and arranged on opposite sides of the reaction region, can each be arranged parallel to one another, the mounting planes of at least one of the pairs being arranged at an angle to the mounting planes of at least one other of the pairs. In this way, in particular, the heat radiation of several heating elements can be bundled and focused on specific areas.

This is particularly true if, as in one embodiment as disclosed herein, the radiant heaters or heating elements of the corresponding pairs arranged on the two sides of the reaction zone are each arranged in such a way that for the heating elements of the corresponding pairs the normal vectors perpendicular to their respective mounting planes converge towards the reaction region.

To apply thermal radiation to certain geometries of reaction zones in a particularly advantageous manner, a reactor arrangement can be provided in which the radiant heaters have different geometries and/or different surface areas. For example, in known reactors for steam cracking, the reaction zones taper in a lower subregion in which the reverse bends are arranged. This is also illustrated separately below.

In a reactor arrangement as proposed herein, the heating elements can be arranged in different areas of the heating surfaces at different densities to radiate different amounts of heat. In this way, in particular the mentioned partial areas can be supplied with different reaction tube densities or different sections of the reaction tubes can be supplied with different amounts of heat.

As mentioned, in a reactor arrangement according to one embodiment, the radiant heaters may be particularly adapted to heat the reaction tubes to a reaction tube temperature level of 400 to 1,500 °C. With respect to these temperature ranges and partial ranges thereof, reference is expressly made to the above explanations.

In the reactor arrangement, in a preferred embodiment, at least part of the mounting planes or heating surfaces may be parallel to or formed by wall surfaces of the reactor vessel. Multiple adjacent heating surfaces on both sides of the reaction area can also be arranged, for example, to approximate a parabolic shape or other non-straight shapes in the horizontal and/or the vertical cross-section of the reactor vessel.

An arrangement as proposed herein can be used, as mentioned, in particular in connection with the production of olefins and/or other synthesis products by steam cracking or in connection with the production of synthesis gas or hydrogen by steam reforming, as mentioned at the outset. However, embodiments as disclosed herein are suitable in principle for all types of gas phase reactions in which a feed mixture is passed in a gaseous state through reaction tubes heated from the outside to appropriate temperature levels and is thereby reacted. The reaction tubes can be guided through the reactor vessel in any way conceivable, in particular with or without one or more reverse points or reverse bends. In particular, they can be arranged in a single row within the reaction region and heated by means of heating elements arranged on both sides of the reaction region. A multi-row arrangement of the reaction tubes within the reaction region and corresponding heating from outside the reaction region is also possible.

In particular, the reaction tubes may have a length of 5 to 100 m and/or a diameter of 20 to 200 mm. Furthermore, the individual reaction tubes can be designed in sections comprising two or more parallel passes with reduced diameters as compared to a single tube. In certain embodiments, the multi-pass section is arranged close to the reaction feed inlet into the furnace in order to provide the highest possible length-specific reaction tube wall area in this region. Further downstream in this arrangement, the initially parallel passes are combined into a common pass with a preferably larger diameter. In this example, the reaction tube consists of the two or more parallel passes, the junction, particularly including a connection fitting, and the combined pass.

Conversely, it is also possible in principle to provide a multi-pass design of the reaction tube at the end or in the middle section, with intermediate dividing and, if necessary, additional joining pieces. Generally, tubes may be split and/or combined in embodiments as disclosed herein in any conceivable manner. The reaction tubes can also be filled with a suitable catalyst material and/or an inert material or may be provided in an empty form, depending on the type of reaction.

In the method of carrying out a chemical reaction, which is also provided herein, use is made of a reactor arrangement as described herein. For further features of such a method, particular reference is made to the corresponding independent claim. For further embodiments of a corresponding process in which, in particular, a reactor arrangement can be used in any of the embodiments explained above, reference is expressly made to the above explanations.

Certain further aspects of embodiments as disclosed herein are again explained below, partly reiterating what was already mentioned above.

Embodiments disclosed herein provide for heating of the reaction tubes using electrically provided radiant heat. However, this does not preclude the use of other types of heating in addition, for example, direct heating in which the reaction tubes themselves are used as electrical resistors to generate heat, inductive heating or, in further reactor vessels of the reactor arrangement, heating using burners. In either case, in addition to radiant heat, some of the heat provided by means of an appropriate heater or heating element may also be convectively transferred to the reaction tubes.

Therefore, if reference is made here to the use of indirect electrical heating, i.e. the use of thermal radiation provided by means of electrical heating elements, this does not exclude the presence of additional electrical or non-electrical heating. In particular, it may also be envisaged to vary the contributions of the types of electrical and, in particular, non-electrical heating over time, for example as a function of the supply and price of electricity or the supply and price of non-electrical energy sources.

A "reactor vessel" is understood herein to mean an enclosure which is partially or completely thermally insulated from the outside and which can in particular be lined with a material which is thermally resistant at the temperatures mentioned. Also, an insulation regarding material flows, particularly gases, may be provided at least to a certain extent in embodiments as disclosed herein.

The reactor vessel may in particular be surrounded predominantly, i.e. to at least 90%, 95%, 99%, 99.5% or 99.8%, by (solid) walls having thermally insulating properties. These walls may comprise a tight, continuous or impervious backlayer, such as a metallic sheet, and one or more insulation layers. The figures given for the proportion in which the reactor vessel is "surrounded by an insulating wall" may, in this connection, particularly be understood as a proportion of overall housing of the reactor vessel which is made up of solid structures having thermally insulating properties, i.e. which are cladded with, or made from or include, a thermally insulating material. Openings or ports of the reactor housing, which are typically not provided as being fully thermally insulating, may be included in any part of the reactor wall, which is - as understood herein - provided as being "thermally insulating", i.e. it may have a thermal transmittance below 2 W/m²K, particularly below 1.5 W/m²K, below 1 W/m²K, below 0.5 W/m²K or below 0.2 W/m²K.

The term "thermal transmittance" is intended to express that the value indicated by the associated figure refers (only) to the heat transfer coefficient pertaining to conduction through the solid structure (particularly excluding radiative and convective heat transfer components on the inside and outside of the wall).

As mentioned, the present invention is not limited to the use of exactly one reactor vessel but can in particular also be used in arrangements with differently heated reactor vessels. Further details on corresponding reactor vessels and their equipment with gas feed devices and, if applicable, gas extraction devices and their connection to stacks and the like are omitted for conciseness.

All embodiments of the invention can be realized, in particular, in combination with conditioning of the atmosphere inside the reactor vessel.

The provision of the gas atmosphere according to the design is advantageous in connection with the metallic alloys mentioned, but also in principle for use in connection with other materials, for example based on MoSi2 or SiC, irrespective of the damage effect to be observed in each case.

Optical access points (e.g. viewing windows or boroscope or camera access points) to the inside of the reactor vessel can be provided for observing the reaction tubes and radiant heaters during operation.

As a further protective measure, the outer walls of the reactor vessel can be made at least partially of non-magnetizable materials (e.g. stainless steel) so that no closed magnetic circuits can form on the box surface (avoidance of hot surfaces).

The invention is further explained below with reference to the following examples and accompanying drawings, which illustrate embodiments of the present invention with reference to and in comparison with the prior art.

### Figures

Figures 1 to 5 illustrate arrangements according to certain embodiments.
Figure 6 illustrates a heater used in arrangements according to certain embodiments.
Figures 7A to 7C illustrate arrangements not forming part of the invention.
Figures 8A to 8C illustrate arrangements according to certain embodiments.
Figures 9A and 9B illustrate arrangements according to certain embodiments.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

### Examples

In a comparative Example 1 not forming part of the present invention, the reactor vessel is used for steam cracking of naphtha and shows a rectangular horizontal cross section, with two opposing inner wall surfaces utilized as mounting planes for metallic heating elements, while the two remaining inner wall surfaces are non-heated surfaces. The reaction region contains three split coils, each with one reverse bend located at the bottom of the furnace. In this first comparative example, only 87.0 % of the effectively heated surface has a normal vector which crosses the contour of the reaction region. The average heat flux at the reaction tube surface is 68 kW/m², and the ratio of outer reaction tube surface to inner void volume is equal to 86 m²/m³. The ratio between total heating element outer surface and total reaction tube outer surface is equal to 4.2 m²/m². The heating elements used in comparative example 1 show a ratio between inner solid volume and outer element surface equal to 1.74 mm³/mm².

As calculated by computational fluid dynamics (CFD) simulations, the heater or heating element temperature over the effectively heated surface shows distinct hotspots in particular in the region close to the reactor bottom. The difference between calculated maximum local heating element temperature and spatially averaged heating element temperature over the entire heating surface is equal to 40 K, which is likely to lead to a significant variability in heating element durability among the heating elements in the same reactor vessel, the hottest element failing rather earlier than the average element and therefore requiring earlier maintenance, repair, or replacement.

In a comparative Example 2 likewise not forming part of the present invention, the same reaction tube design is used in combination with a different heating element design covering the same effectively heated surface area as in the comparative Example 1. In comparative Example 2, the ratio of heating element outer surface to reaction tube outer surface is equal to 1.2 m²/m². The heating elements used in comparative example 2 show a ratio between inner solid volume and outer element surface equal to 1.75 mm³/mm².

As calculated by CFD simulations, the average heating element temperature in a representative horizontal cut plane in comparative Example 2 is increased by as much as 75 K compared to the same cut plane in comparative Example 1. Although both examples are not built according to the present invention, it clearly indicates that the higher ratio between heating element outer surface and reaction tube outer surface in comparative Example 1 has a positive impact on the resulting heating element temperatures and thus on their durability.

In an Example 1 according to certain embodiments as proposed herein, six non-split coils with an average heat flux of 56.4 kW/m² at the reaction tube outer surface and a ratio between outer reaction tube surface and inner void volume of 107 m²/m³ are used in the same reactor vessel as previously described for comparative Example 1, with a residence time comparable to the one observed in comparative Example 1. In this example 1, 96.9 % of the effectively heated surface has a normal vector which crosses the contour of the reaction region.

As evaluated by CFD simulations, the difference between calculated maximum local heating element temperature and spatially averaged heating element temperature over the entire heating surface is now reduced to 26 K, describing a significantly improved temperature homogeneity, which can be mainly attributed to the improved geometric arrangement between heating elements and reaction region. Moreover, the modified reaction tube design enables a decrease of the average temperature on the outer reaction tube surface of 27 K compared to comparative Example 1, and subsequently to a reduction in average heating element temperature of 37 K compared to comparative Example 1.

Eventually this results in a reduction in maximum heating element temperature of 51 K compared to comparative Example 1. The embodiment according to Example 1 thus is expected to show a significant improvement in heating element durability compared to comparative Example 1, which is achieved by a combination of multiple features of embodiments proposed herein. This beneficial effect is reached in Example 1 by providing a ratio between heating element outer surface and reaction tube outer surface equal to 3.5 m²/m². The heating elements used in Example 1 show a ratio between inner solid volume and outer element surface equal to 1.74 mm³/mm².

In an Example 2 according to embodiments as proposed herein, four split coils with reduced diameter compared to comparative Example 1 are used, with an average heat flux of 57.1 kW/m² at the outer tube surface and a ratio of outer reaction tube surface to inner void volume equal to 102 m²/m³, with a residence time comparable to the one observed in comparative Example 1. As calculated by kinetic reactor tube modelling, the reaction tube design used in Example 2 will lead to a decrease of the average temperature on the outer reaction tube surface of 18 K compared to comparative Example 1. Example 1 and Example 2 thus show that the targeted reduction in average temperature on the outer reaction tube surface can be reached with different reaction tube design topologies, when respecting the indicated ranges for average heat flux and ratio between outer reaction tube surface to inner void volume.

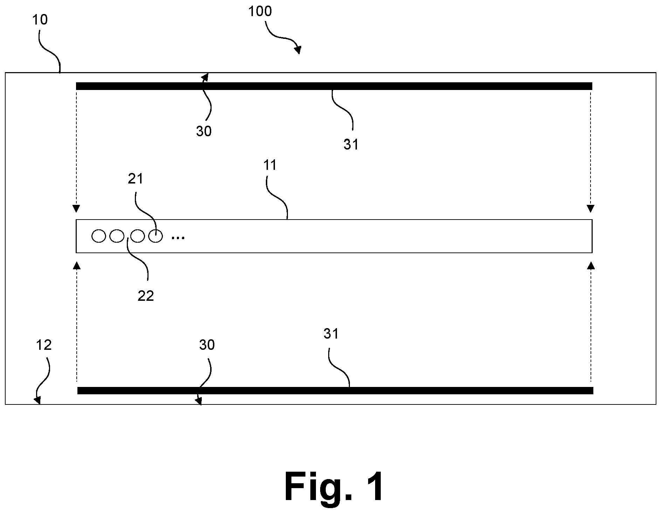

Turning now to the drawings, Figures 1 to 5 schematically illustrate reactor arrangements 100 to 500 for carrying out a chemical reaction according to embodiments of the present invention.

In a reactor arrangement illustrated in Figure 1, designated overall as 100 and illustrated in a horizontal cross-section, reaction tubes 21, illustrated in a highly simplified manner and designed in the manner mentioned above, are arranged in a reactor vessel 10 also designed as explained above. A plurality of reaction tubes 21 of arbitrary number may be present, as indicated by ellipsis points. Only one reaction tube 21 is indicated with a corresponding reference numeral for reasons of clarity. More precisely, the reaction tubes 21 are located in an area in the interior of the reactor vessel 10, which is also referred to herein as a reaction region 11 and is defined as explained above. Thus, the reactor arrangement 100 comprises a reactor vessel 10 and a reaction region 11 within the reactor vessel 10.

In the views illustrated in Figures 1 to 5, the reaction tubes 21 may extend from above the plane of the paper to below the plane of the paper, or in the reverse direction, and thus through the reactor vessel 10 and through the reaction region 11 within the reactor vessel 10. The reaction region 11 includes at least the central 90% of a run length of each of the reaction tubes 21 within the reactor vessel 10, and the reaction tubes 21 are spaced apart from each other at least in the reaction region 11 by tube interspaces 22. As for the reaction tubes 21, only one interspace 22 is indicated with a corresponding reference numeral. Instead of a single-row arrangement illustrated in Figure 1, multi-row arrangements are also possible in the reaction zone 11.

A plurality of electric radiant heaters 31 are provided in the reactor vessel 10, which are adapted to heat the reaction tubes 21 with thermal radiation. For simplification, Figure 1 shows only one electric radiant heater 31 on each side of the reaction zone 11. Each of the radiant heaters 31 is arranged to radiate heat radiation which comprises heat radiation radiated perpendicularly to a mounting plane 30 of the radiant heater 31 in the reactor vessel 10. The mounting planes 30 of the radiant heaters 31 are defined here in each case by wall inner surfaces of outer walls of the reactor vessel 10, in the vicinity of which the radiant heaters 31 are mounted.

The radiant heaters 31 are arranged and aligned in the direction of the reaction zone 11 in such a way that, as illustrated by dashed arrows, the heat radiation of each of the radiant heaters 31 radiated perpendicularly to the mounting plane 30 is directed in a proportion of more than 90% (and according to Figure 1 completely) onto the reaction tubes 21 and the tube interspaces 22 in the reaction zone 11. At the same time, the heat radiation of one or more of the radiant heaters 31 radiated perpendicularly to the mounting plane 30 is directed onto a proportion of more than 90% of the reaction tubes 21 and the tube interspaces 22 in the reaction region 11.

In this way, in particular, direct mutual irradiation of opposing radiant heaters 31, but also direct irradiation of an uncooled reactor wall 12 (of which only one instance is indicated by a corresponding reference numeral) by a radiant heater 31 can be avoided and heat can be supplied to the reaction tubes 21 in the desired quantity.

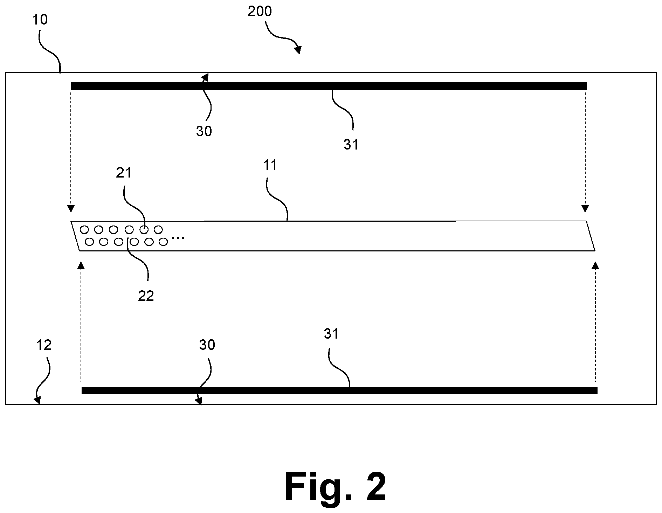

A reactor arrangement 200 according to a further embodiment as disclosed herein is shown in Figure 2. Arrangement 200, which is shown in the same view as arrangement 100, differs from arrangement 100 in the aspects that the reaction tubes 21 are arranged in two rows and the reaction region has a shape differing from a square in cross-section. The arrangement of the radiant heaters 31 is adapted to correspond thereto such that the conditions indicated above are met also in this situation.

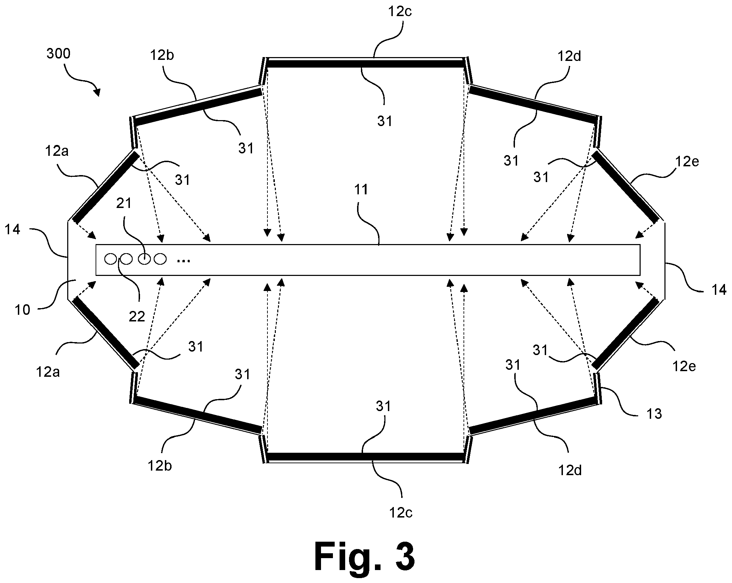

The reactor arrangement illustrated in Figure 3, designated overall as 300, is illustrated in cross-section, as is the case for arrangements 100 and 200. The reactor arrangement differs from the reactor arrangements 100 and 200 in Figure 1 in particular by the shape of the outline of the reactor vessel 10. Wall sections 12a to 12e of the reactor wall 12 are arranged at an angle in such a way that they approximate a curved surface on both sides of the reaction zone 31 but are separated by wall sections oriented differently.

The mounting planes, defined by the wall portions 12a to 12e, of each of four pairs of radiant heaters 31, which are respectively assigned to each other and arranged on opposite sides of the reaction area 11, are respectively arranged parallel to each other, and the mounting planes of these pairs are arranged at an angle to each other. The radiant heaters 31 of the pairs arranged on the two sides of the reaction area 11 are further respectively arranged such that the heat radiation of the radiant heaters 31 radiated perpendicularly to the mounting planes 30 converges within the reaction region 11 of the reactor vessel 10.

Wall sections or surfaces indicated by double lines, one of which is labelled 13, do not carry radiant heaters, as they would not fulfill the criteria which are applicable to arrangement 300 as well, i.e. that, as illustrated by dashed arrows, the heat radiation of each of the radiant heaters 31 perpendicularly to the mounting plane 30 is directed in a proportion of more than 90% onto the reaction tubes 21 and the tube interspaces 22 in the reaction zone 11, and at the same time, the heat radiation of one or more of the radiant heaters 31 radiated perpendicularly to the mounting plane 30 is directed onto a proportion of more than 90% of the reaction tubes 21 and the tube interspaces 22 in the reaction region 11.

For potential heaters 31 at the surfaces 13 less than 90% of the local normal vectors would cross the contour of the reaction region 11 (here 0% would actually cross the contour of the reaction region 11). Furnace end walls 14 (perpendicular to the coil curtain) may in certain embodiments also be (fully or partially) equipped with heating elements, although this is not a mandatory feature of the invention.

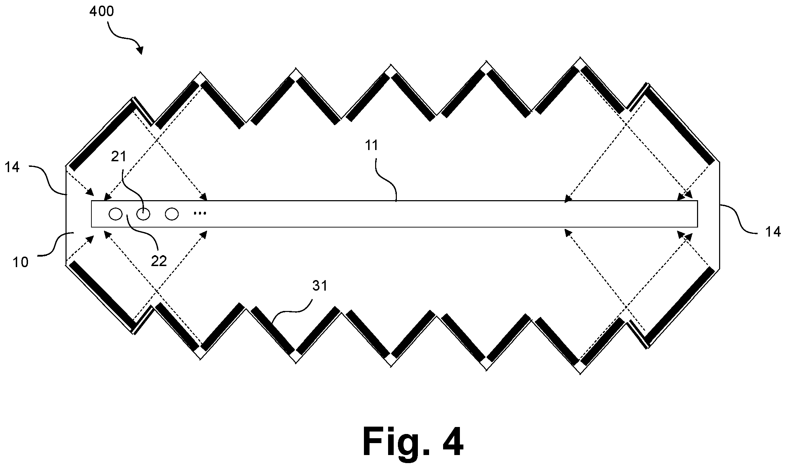

The reactor arrangement illustrated in Figure 4, designated overall as 400, is illustrated in cross-section, as is the case for arrangements 100, 200 and 300. It represents a further example wherein the reactor 10 has non-parallel walls. As to the explanations for arrangement 400, in which certain drawing elements and labels are omitted for clarity, reference is made to the explanations for arrangement 300. Identical or comparable elements in arrangements 300 and 400 are indicated with like drawing styles, such as the heaters 31 and the unoccupied wall surfaces.

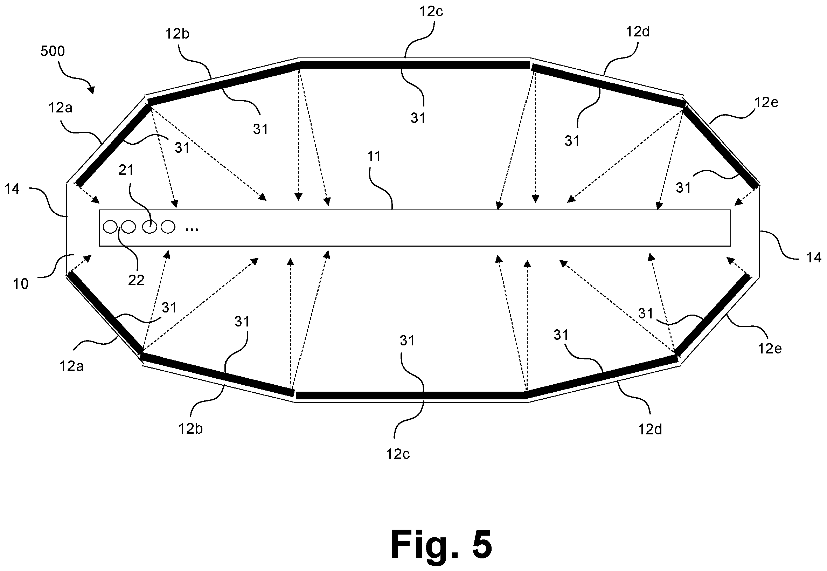

This is also the case for the reactor arrangement illustrated in Figure 5, designated overall as 500, which may be considered to represent a variant of arrangement 300 in which the walls 12a to 12e carrying the heaters 31 contact each other.

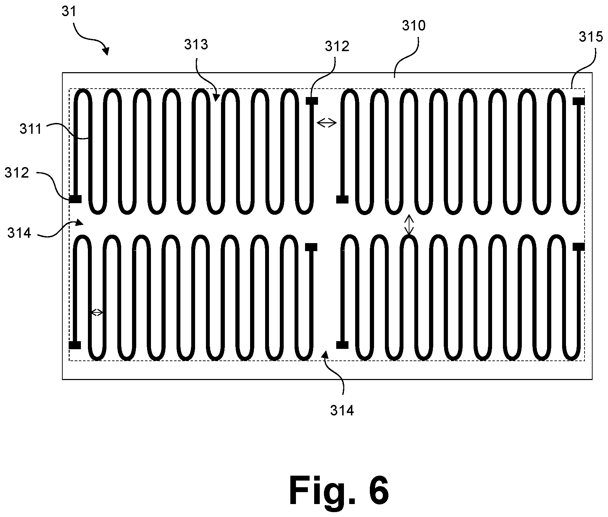

In Figure 6, a heater 31 as usable in embodiments illustrated herein is schematically visualized. Heater 31 comprises a mounting surface such as a ceramic substrate, on which or in the vicinity of which, in the example shown, but not limiting the scope of the invention, four meander-shaped heating element structures 311 with electrical connectors 312 are mounted (indicated in the upper left heating element structure 311 but equally the case for the other heating element structures shown). The straight sections of the heating element structures 311 are distanced by a heating element intraspace 313 from each other and the heating element structures 311 are distanced by heating element interspaces 314. Using the heating element structures 311, an effectively heated surface 315 is created.

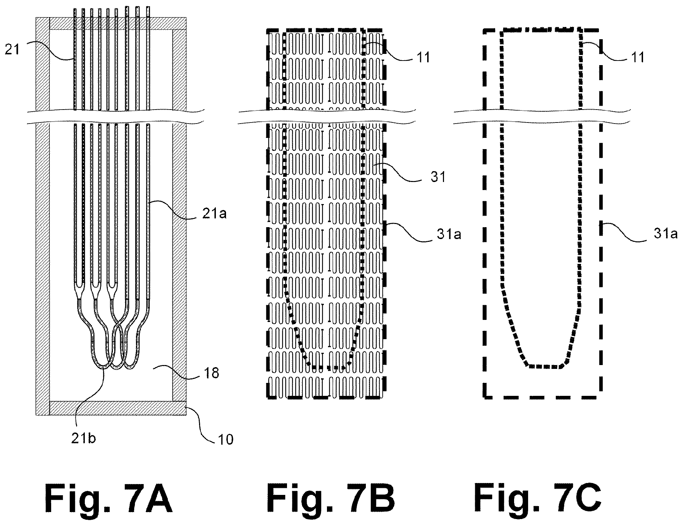

In Figures 7A to 7C, aspects of a comparative example not forming part of the invention are illustrated. Figure 7A illustrates a vertical cross-section through a reactor 10 whose walls are illustrated with a diagonal hatch. Reaction tubes 21 are shown in a form common for steamcracking reactors, i.e. they comprise straight sections 21a running vertically and comprising a split portion, and reverse bends 21b at the bottom. A wall surface 18 may be equipped with heating elements which are not shown in Figure 7A but are illustrated in Figure 7B which, in turn, does not show the reaction tubes 21 but rather a reaction region 11 as defined above which is indicated by a dotted line. An effectively heated surface is indicated 31a, and this does not match the reaction region 11 in shape, as again shown in Figure 7C in a more generalized way.

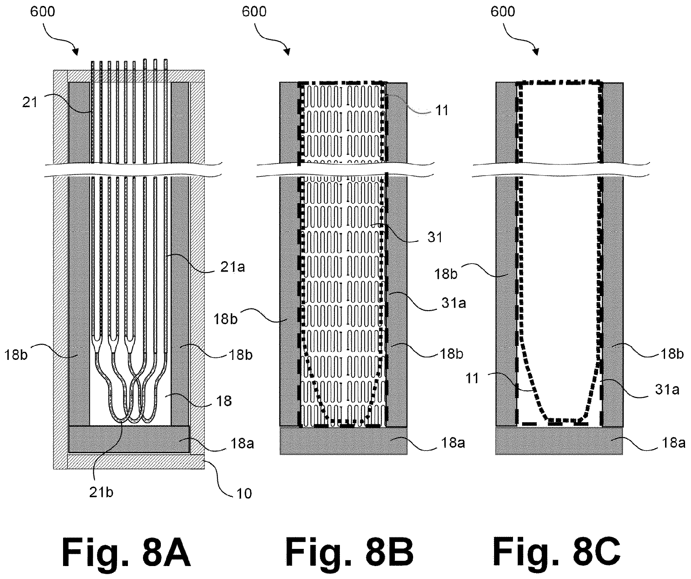

In a reactor arrangement illustrated in Figures 8A to 8C, designated 600 overall and shown in a vertical cross-section through a reactor 10, reaction tubes 21, also illustrated in a highly simplified manner and designed as typical for steam cracking, are arranged in a reactor vessel 10 also designed as explained above.

Here, the reactor arrangement has a reactor vessel 10 and a reaction region 11, which contains the reaction tubes 21, within the reactor vessel 10. In the view illustrated herein, the reaction tubes 21 extend with two parallel passes each in the plane of the paper from top to bottom, change direction in reverse bends 21b, and then extend with a single pass 21a each in the reverse direction and thus through the reactor vessel 10 and through the reaction region 11 within the reactor vessel 10. The reaction region 11 also includes at least the central 90% of the run length of each of the reaction tubes 21 within the reactor vessel 10, and the reaction tubes 21 are spaced apart from each other at least in the reaction region 11 by tube interspaces which are not individually indicated here. Instead of a single-row arrangement, multi-row arrangements are also possible in the reaction region 11.

In Figures 8A to 8C, aspects of an embodiment disclosed herein are illustrated in the form of an arrangement 600. Views are essentially the same as for Figures 7A to 7C. An essential difference is that parts 18a and 18b of the wall surface 18, which is provided with heaters 31 in the configurations shown in Figures 7A to 7C are kept free from heaters. These parts 18a and 18b of the wall surface 18are additionally indicated with a cross-hatch. As can be seen in particular from Figures 8B and 8C, this allows for efficient targeting of the radiation heat to the reaction zone 11 and leaving uncooled wall sections, which do not directly face the reaction zone 11, such as the parts 18a and 18b of the wall surface 18, unradiated, thus avoiding overheating.

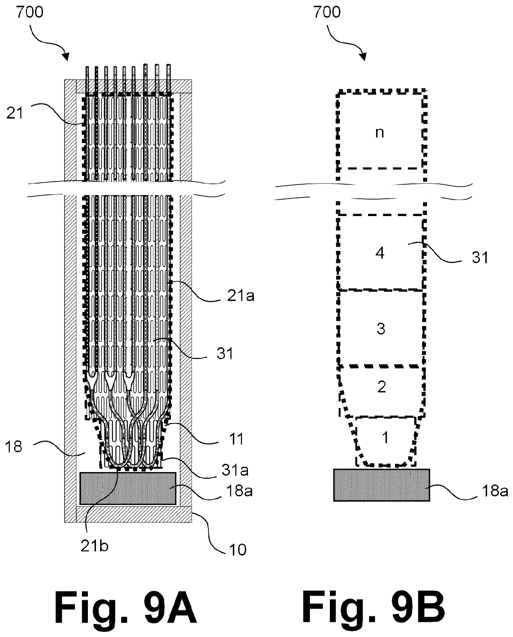

In Figures 9A and 9B, aspects of a yet further embodiment disclosed herein are illustrated in the form of an arrangement 700. As illustrated in Figure 9A, by arranging the heaters 31 accordingly, the effective heating surface 31a is made to closely match the reaction zone 11. As illustrated in Figure 9B, the heaters 31 are arranged in several groups 1, 2, 3, 4 ... n, which are individually controllable to provide a targeted amount of heat to the reaction tubes 21.

That is, a partial region 31a of a reactor wall 18 lying parallel to the plane of the paper is here occupied by one or more radiant heaters 31. This region is tapering in downward direction in accordance with the shape of the reaction tubes 21 defined by the reverse bends 21b. Thereby, as already explained before, in particular a direct mutual irradiation of opposite radiant heaters 31, but also a direct irradiation of an uncooled reactor wall 18a by a radiant heater 31 can be avoided and heat can be supplied to the reaction tubes 21 in the desired quantity.

The groups 1, 2, 3, 4 ... n of heaters 31 are particularly directed to partial regions of the reaction region 11 in which the reaction tubes 21 are arranged in different reaction tube densities, as is the case due to the reverse bends present in the region 11b. The radiant heaters 31 are therefore arranged to apply different amounts of heat to the certain subregions of the reaction region 11.

## Claims

1. A reactor arrangement (100-700) configured for carrying out a chemical reaction, the reactor arrangement comprising:
- a reactor vessel (10) comprising reactor walls (12, 12a-e, 13, 14, 18, 18a-b) and a reaction region (11) within the reactor vessel (10), and
- a plurality of reaction tubes (21) extending through the reactor vessel (10) and through the reaction region (11) therein,
wherein:
- the reaction region (11) comprises at least the central 90% of the run length of each of the reaction tubes (21) within the reactor vessel (10),
- the reaction tubes (21) are spaced apart from one another at least in the reaction region (11) by reaction tube interspaces (22),
- one or more electric heaters (31) with heating elements (311) are provided which are configured to heat the reaction tubes (21) with radiant heat,
- one or more mounting planes (30, 310) are provided within the reactor vessel in the form of planar contiguous surfaces,
- the one or more electric heaters (31) with the heating elements (311) are arranged on or in the vicinity of the one or more mounting planes (30, 310),
- the heating elements (311) of the heaters (31) are spaced apart from one another by heater interspaces (314) and/or the heating elements (311) themselves are spaced apart by heating element intraspaces (313),
- the sum of the heaters (31) including the heating elements (311), the heater interspaces (314) and the heating element intraspaces (313) define an effectively heated surface (31a, 315) on said mounting plane (30, 310),
- for at least 90% of the effectively heated surface area on each mounting plane (30, 310), the local normal vector to the mounting plane is directed onto the reaction region (11).

2. The reactor arrangement (100-700) according to claim 1, wherein distinct mounting planes (30, 310) of at least two of the heaters (31) are arranged parallel to each other and on opposite sides of the reaction region (11), the at least two heaters (31) facing the opposite sides of the reaction region (11).

3. The reactor arrangement (100-700) of claims 1 or 2, wherein inlet and outlet connections to the reaction tubes (21) are located in an upper region of the reactor vessel (10) and the one or more reaction tubes (21) each have one or more reverse bends (21b) in a lower region of the reactor vessel (10) below which a clearance space free of reaction tubes (21) is provided in the reactor vessel (10), wherein the mounting planes are free of heaters (31) within a surface area portion corresponding to the clearance space in the reactor vessel (10).

4. The reactor arrangement (100-700) according to any one of the preceding claims, wherein the absorbed heat flux at an outer surface of the one or more reaction tubes (21) is in a range between 40 and 65 kW/m².

5. The reactor arrangement (100-700) according to claim 4, wherein the one or more reaction tubes (21) are provided with a ratio between total outer reaction tube surface to a total inner void volume of more than 90 m²/m³.

6. The reactor arrangement (100-700) according to any one of the preceding claims, wherein no more than ten parallel outlet reaction tube segments are disposed directly next to each other.

7. The reactor arrangement (100-700) according to any one of the preceding claims, wherein the heating elements (31) are made of an alloy containing iron, chromium, and aluminum.

8. The reactor arrangement (100-700) according to claim 7, wherein the ratio between the total outer heating element surface area and the total outer reaction tube surface area lies between between 2 and 5 m²/m².

9. The reactor arrangement (100-700) according to claim 7 or 8, wherein the cross-section profile of the one or more heating elements (31) shows a ratio between an inner solid volume and an outer element surface of at least 1.5 mm³/mm² at all locations along the length of the one or more heating elements.

10. The reactor arrangement (100-700) according to any one of the preceding claims, in which different groups of one or more heating elements (31) facing different areas of the reaction region can be designed differently and/or be controlled separately to supply different heating duties.

11. The reactor arrangement (100-700) according to any one of the preceding claims, wherein coating layers and/or heat transfer promoting structures are provided on an inside and/or an outside of the reaction tube surface.

12. The reactor arrangement (100-700) according to any one of the preceding claims, wherein the radiant heaters (31) are adapted to heat the reaction tubes (3) to a reaction tube temperature level of 400 to 1,500 °C.

13. The reactor arrangement (100-700) according to any one of the preceding claims, which is arranged to carry out a steam cracking process, a reforming process, or a dehydrogenation of alkanes.

14. A method of performing a chemical reaction, wherein a reactor arrangement (100-700) configured for carrying out the chemical reaction is used, the reactor arrangement comprising:
- a reactor vessel (10) comprising reactor walls (12, 12a-e, 13, 14, 18, 18a-b) and a reaction region (11) within the reactor vessel (10), and
- a plurality of reaction tubes (21) extending through the reactor vessel (10) and through the reaction region (11) therein,
wherein:
- the reaction region (11) comprises at least the central 90% of the run length of each of the reaction tubes (21) within the reactor vessel (10),
- the reaction tubes (21) are spaced apart from one another at least in the reaction region (11) by reaction tube interspaces (22),
- one or more electric heaters (31) with heating elements (311) are provided which are configured to heat the reaction tubes (21) with radiant heat,
- one or more mounting planes (30, 310) are provided within the reactor vessel in the form of planar contiguous surfaces,
- the one or more electric heaters (31) with the heating elements (311) are arranged on or in the vicinity of the one or more mounting planes (30, 310),
- the heating elements (311) of the heaters (31) are spaced apart from one another by heater interspaces (314) and/or the heating elements (311) themselves are spaced apart by heating element intraspaces (313),
- the sum of the heaters (31) including the heating elements (311) the heater interspaces (314) and the heating element intraspaces (313) define an effectively heated surface (31a, 315) on said mounting plane (30, 310),
- for at least 90% of the effectively heated surface area on each mounting plane (30, 310), the local normal vector to the mounting plane is directed onto the reaction reaction region (11).

15. The method according to claim 14, wherein a reactor assembly (100-700) according to any one of claims 1 to 13 is used and wherein a process gas outlet temperature in the one or more reaction tubes is particularly maintained below 860 °C during a reaction period.
